Europäisches Patentamt

European Patent Office

Office européen des brevets

(19)

(11) EP 0 778 681 A2

(12) EUROPÄISCHE PATENTANMELDUNG

(43) Veröffentlichungstag:
11.06.1997 Patentblatt 1997/24

(51) Int. Cl.$^6$: H04B 10/155

(21) Anmeldenummer: 96114517.4

(22) Anmeldetag: 11.09.1996

(84) Benannte Vertragsstaaten:
DE ES FR IT NL

(30) Priorität: 06.12.1995 DE 19545435

(71) Anmelder: ROBERT BOSCH GMBH
70442 Stuttgart (DE)

(72) Erfinder:
• Wegener, Reinhard
10318 Berlin (DE)
• Kaste, Norbert
12679 Berlin (DE)

(54) Linearisierungsschaltungsvorrichtung

(57) Es wird eine Linearisierungsschaltungsvorrichtung für einen elektrooptischen Modulator vorgeschlagen, bei der ein elektrisches Modulationssignal über ein Gegenphasenteilelement aufgeteilt und mittels zweier Verzerrungselemente verzerrt wird. Der elektrooptische Modulator weist zwei Differenzeingänge auf, denen die Einzelsignale zugeführt sind.

Fig. 4

EP 0 778 681 A2

**Beschreibung**

Stand der Technik

Die Erfindung geht aus von einer Linearisierungsschaltungsvorrichtung nach dem Oberbegriff des Hauptanspruchs.

Aus der WO 94/02998 ist es bereits bekannt, einen externen Modulator eines Lasers durch Vorschalten einer Linearisierungsschaltungsvorrichtung in seiner Kennlinie zu linearisieren. Dazu weist die Linearisierungsschaltungsvorrichtung einen Vorverzerrer auf, dessen Übertragungsfunktion die Umkehrfunktion der Übertragungsfunktion des externen Modulators ist.

In der US-PS 5,282,072 ist eine weitere Linearisierungsschaltungsvorrichtung für einen elektrooptischen Modulator beschrieben, bei dem die Linearisierungsschaltungsvorrichtung in Form einer Gegentakt-Verstärkeranordnung aufgebaut ist, so daß eine ausreichend hohe Ansteueramplitude mit einem ausreichend geringen Anteil unerwünschter Verzerrungen für den externen Modulator zur Verfügung steht. Die dort gezeigte Linearisierungsschaltungsvorrichtung weist zur Aufteilung des Modulationssignals in zwei Einzelsignale ein Gegenphasenteilelement, (oder auch 180°-Hybrid) auf, das eine Phasendifferenz in den beiden Einzelsignalen von 180° bewirkt. Die beiden Einzelsignale werden jeweils einem Vorverzerrerelement zugeführt und danach verstärkt. Anschließend gelangen die beiden vorverzerrten und verstärkten Einzelsignale wiederum an ein 180°-Hybrid, das hier als Koppelelement dient. Das Ausgangssignal des Koppelelements wird dem elektrooptischen Modulator zugeführt.

Vorteile der Erfindung

Die erfindungsgemäße Linearisierungsschaltungsvorrichtung mit den Merkmalen des Hauptanspruchs hat demgegenüber den Vorteil, daß wenigstens eines der 180°-Hybride entfallen kann. Da solche 180°-Hybride breitbandige HF-Transformatoren enthalten, welche stets Amplituden- und Phasenfrequenzgangfehler zur Folge haben, ist deren Einfluß im Signalweg zwischen der Linearisierungsschaltungsvorrichtung und dem elektrooptischen Modulator besonders hoch. Die Einsparung dieses 180°-Hybrids verbessert daher den Amplituden- und Phasenfrequenzgang und damit auch die erzielbare Linearität für den elektrooptischen Modulator. Außerdem verringert sich dabei die notwendige Verstärkung der vorverzerrten Einzelsignale, so daß der entsprechende Verstärker einen geringeren Intermodulationsbeitrag zu den Einzelsignalen liefert. Schließlich bewirkt die Gegentaktansteuerung des elektrooptischen Modulators eine Beseitigung einer unerwünschten Phasenmodulation des optischen Ausgangssignals (Chirp), was die optische Signalqualität insbesondere für lange Übertragungsstrecken verbessert.

Durch die in den Unteransprüchen aufgeführten Maßnahmen sind vorteilhafte Weiterbildungen und Verbesserungen der im Hauptanspruch angegebenen Linearisierungsschaltungsvorrichtung möglich.

Die Maßnahme nach Anspruch 2, dergemäß das Verzerrungselement eine teilweise Reihenentwicklung der Funktion der Nichtlinearität des elektrooptischen Modulators realisiert, stellt insofern einen Vorteil dar, als durch die Reihenentwicklung eine diskrete, mathematische Approximation der Umkehrfunktion der Übertragungsfunktion des elektrooptischen Modulators realisierbar ist, deren Ordnung und damit Approximationstiefe vom Benutzer der Linearisierungsschaltungsvorrichtung dem jeweiligen Anwendungsfall anpaßbar ist.

Die Auswahl eines Laufzeitelements und/oder eines Multiplizierers und eines Funktionselements für das Verzerrungselement bietet den Vorteil des minimalen Aufwandes zur Erreichung der Approximation.

Sind die beiden Verzerrungselemente miteinander über Kreuz verschaltet, in dem anstelle eines 180°-Hybrids ein Leistungsteilerelement vorgesehen ist, von dem jeweils ein Ausgang über ein Funktionselement des anderen Koppelelements geführt ist, so minimiert sich die Anzahl der notwendigen 180°-Hybride, bzw. Gegenphasenteilelemente, wodurch sich auch die Amplituden- und Phasenfrequenzgangfehler in der Schaltung minimieren. Dadurch erhält die Schaltung außerdem eine höhere Frequenzbandbreite, innerhalb der ein hohes Maß an Linearität für den elektrooptischen Modulator erzielbar ist.

Zeichnung

Ausführungsbeispiele der Erfindung sind in der Zeichnung dargestellt und in der nachfolgenden Beschreibung näher erläutert.

Es zeigen:

Figur 1 ein erstes Ausführungsbeispiel für eine Linearisierungsschaltungsvorrichtung mit einem elektrooptischen Modulator mit zwei Differenzeingängen,
Figur 2 einen elektrooptischen Modulator mit zwei Differenzeingängen,
Figur 3 den Aufbau eines Verzerrungselements,
Figur 4 ein zweites Ausführungsbeispiel für eine Linearisierungsschaltungsvorrichtung mit nur einem Gegenphasenteilelement.

Beschreibung der Ausführungsbeispiele

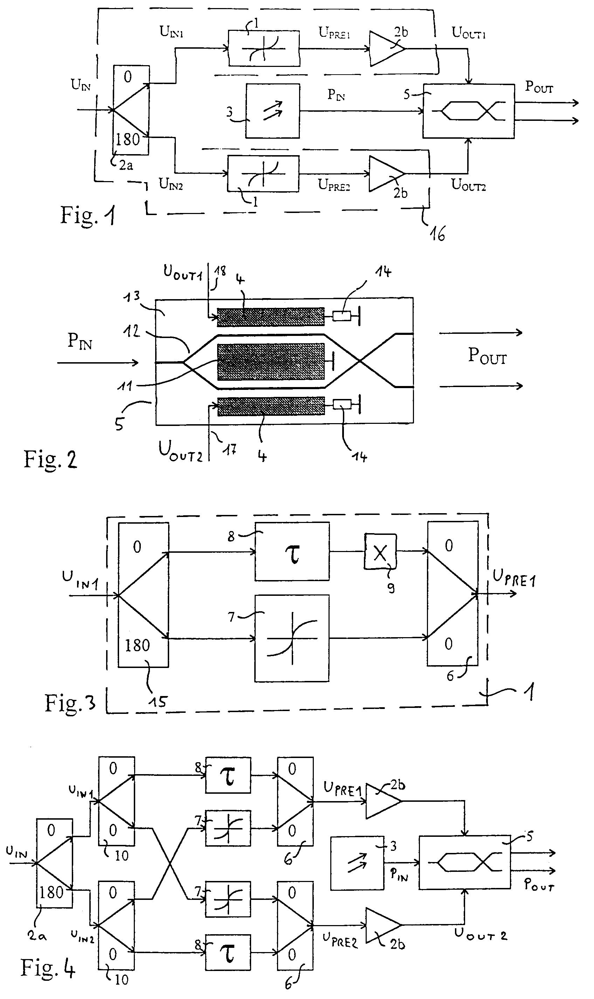

In Figur 1 ist eine optische Quelle 3 dargestellt, die ein optisches Eingangssignal $P_{IN}$ an den optischen Eingang eines elektrooptischen Modulators 5 sendet. Der elektrooptische Modulators 5 ist beispielhaft als Mach-Zehnder-Interferometer ausgebildet, dessen detaillierter Aufbau im Zusammenhang mit Figur 2 beschrieben werden wird. Weiter ist eine Linearisierungsschaltungsvorrichtung 16 vorgesehen, die ein Gegenphasenteilelement 2a mit einem Eingang und zwei Ausgängen aufweist. Das Gegenphasenteilelement 2a ist auch als 180°-Hybrid oder als Gegenphasen-Powersplitter bekannt. Dem Gegenphasenteilelement 2a wird an seinem Eingang ein elektrisches Modulationssignal $U_{IN}$ zugeführt. Das Gegenphasenteilelement 2a weist zwei Ausgänge auf, die jeweils einem Verzerrungselement 1 zugeführt sind. Jedem Verzerrungselement 1 ist ein Verstärker 2b nachgeschaltet, dessen Ausgang zum elektrooptischen Modulator 5 geführt ist.

Das elektrooptische Modulationssignal $U_{IN}$ wird mittels des Gegenphasenteilelements 2a in ein erstes Einzelsignal $U_{IN1}$ und ein um 180° in der Phase dagegen verschobenes zweites Einzelsignal $U_{IN2}$ aufgeteilt. Die Einzelsignale $U_{IN1}$ und $U_{IN2}$ gelangen zu den Verzerrungselementen 1, welche eine in diesem Beispiel arcussinusförmige Übertragungsfunktion aufweisen. Am Ausgang der Verzerrungselemente 1 sind vorverzerrte Einzelsignale $U_{PRE1}$, $U_{PRE2}$ abgreifbar, die in den Verstärkern 2b verstärkt werden. Anschließend gelangen die verstärkten, vorverzerrten Einzelsignale $U_{OUT1}$, $U_{OUT2}$ zum elektrooptischen Modulator 5. Der elektrooptische Modulator 5 liefert als optisches Ausgangssignal an seinen Ausgängen das Ausgangssignal $P_{OUT}$, das nach der Formel

$$P_{OUT} = P_{IN} \cdot (½ + ½\sin(U_{OUT1}\text{-}U_{OUT2}/U_{PI})) \tag{1}$$

von der wirksamen Steuerspannung ($U_{OUT1}$-$U_{OUT2}$) abhängt. Falls es sich um einen elektrooptischen Modulator mit zwei optischen Gegentaktausgängen handelt, so folgt eines der Ausgangssignale der Formel (1) also z.B.

$$P_{OUT1} = P_{OUT} \tag{1a}$$

und das andere Ausgangssignal ist stets

$$P_{OUT2} = P_{IN} - P_{OUT1} \tag{1b}$$

Verluste im optischen Modulatior werden bei dieser Betrachtung nicht berücksichtigt.

Dabei ist $U_{PI}$ Modulator-Konstante. Die Verstärker 2b bewirken eine Verstärkung der ankommenden vorverzerrten Einzelsignale $U_{PRE1}$, $U_{PRE2}$ nach der Formel

$$U_{OUT} = G \cdot U_{PRE} \tag{2},$$

wobei G die Verstärkung der Verstärker 2b ist. Da es sich hier um eine Gegentaktanordnung handelt, formt sich Formel (1) zu folgender Formel um:

$$P_{OUT} = P_{IN} \cdot (1/2 + 1/2\sin((U_{OUT1}\text{-}U_{OUT2})/U_{PI})) \tag{3}$$

Das Gegenphasenteilelement 2a bewirkt eine Aufteilung des modulierenden Eingangssignals $U_{IN}$ in

$$U_{IN1} = -U_{IN2} = K \cdot U_{IN} \tag{4},$$

wobei K die Übertragungskonstante des 180°-Hybrides 2a ist. Wenn beide Einzelsignale $U_{IN1}$, $U_{IN2}$ jeweils gleichartige, ideale Verzerrungselemente 1 durchlaufen, entstehen die vorverzerrten Signale $U_{PRE1}$, $U_{PRE2}$ nach der Formel

$$U_{PRE1} = U_0 \cdot \arcsin(U_{IN1}/U_0)$$

$$U_{PRE2} = U_0 \cdot \arcsin(U_{IN2}/U_0) = - U_{PRE1} \tag{5}$$

Bei einer Verstärkung von

$$G = ½ U_{PI}/U_0 \tag{6}$$

erhält man aus Gleichung (2)

$$P_{OUT} = P_{IN} \cdot (\tfrac{1}{2} + \tfrac{1}{2}K \cdot U_{IN}/U_0) \tag{7}$$

Somit besteht ein linearer Zusammenhang zwischen dem optischen Ausgangssignal $P_{OUT}$ und dem elektrischen Eingangssignal $K_{IN}$.

In Figur 2 ist ein Ausführungsbeispiel für den elektrooptischen Modulator 5 dargestellt, wobei dieser in Form eines Mach-Zehnder Interferometers mit zwei Differenzeingängen 17, 18 ausgeführt ist. Dabei ist ein Substrat 13 vorgesehen, das einen Lichtwellenleiter 12 trägt. Der Lichtwellenleiter 12 ist ausgehend vom Eingang für das optische Eingangssignal $P_{IN}$ gerade geformt und geht dann gleichermaßen in zwei voneinander divergierende Teillichtwellenleiter über, die dann weiter parallel verlaufen um nach einer gewissen Strecke erneut zu konvergieren, sich zu überkreuzen und nach der Überkreuzungsstelle wiederum parallel zu verlaufen und die Ausgänge für das optische Ausgangssignal $P_{OUT}$ bilden. Im parallelen Teil der Teillichtwellenleiter zwischen der divergierenden und der konvergierenden Sektion ist eine Masseelektrode 11 angebracht. Auf den der Masseelektrode 11 bezüglich der Teillichtwellenleiter gegenüberliegenden Seiten ist jeweils eine Steuerelektrode 4 angebracht, die über einen Abschlußwiderstand 14 mit Masse verbunden ist. Die beiden Steuerelektroden 4 weisen Anschlüsse 17, 18 auf, die als die Differenzeingänge 17, 18 für die verstärkten, vorverzerrten Einzelsignale $U_{OUT1}$, $U_{OUT2}$ dienen. Durch die beschriebene Anordnung der Steuerelektroden 4 und der Masseelektrode 11 erfolgt auf optischem Wege eine Differenzbildung der beiden verstärkten vorverzerrten Einzelsignale $U_{OUT1}$ und $U_{OUT2}$. Dadurch entfällt ein 180°-Hybrid für die Zusammenführung der beiden vorverzerrten, verstärkten Einzelsignale $U_{OUT1}$ und $U_{OUT2}$. Natürlich kann der Modulator 5 bei gleicher Funktionalität auch anders aufgebaut sein als das Ausführungsbeispiel gemäß Figur 2 zeigt.

In Figur 3 ist ein Ausführungsbeispiel für das Verzerrungselement 1 dargestellt. Das Verzerrungselement 1 weist hierzu ein weiteres Gegenphasenteilelement 15 auf, an dessen einem Ausgang ein Laufzeitelement 8 angeschlossen ist, und dessen anderer Ausgang über ein Funktionselement 7 an einen der Eingänge eines Koppelelements 6 geführt ist. Das Laufzeitelement 8 ist über einen Multiplizierer 9 mit dem weiteren Eingang des Koppelelements 6 verbunden. Dem weiteren Gegenphasenteilelement 15 wird das elektrische Modulationssignal $U_{IN1}$ zugeführt, und am Ausgang des Koppelelements 6 ist das vorverzerrte Einzelsignal $U_{PRE1}$ angreifbar. Eine analoge Schaltung ist für das Verzerrungselement 1 im Zweig des um 180° verschobenen Einzelsignals $U_{IN2}$ vorgesehen. Das Funktionselement 7 weist eine nichtlineare Kennlinie auf. Das Laufzeitelement 8 dient dem Ausgleich des Laufzeitunterschiedes zwischen dem Funktionselement 7 und dem Multiplizierer 9. Der Multiplizierer 9 ist hierbei nicht zwingend vorgesehen. Über das Koppelelement 6 erfolgt eine Zusammenführung der beiden Einzelpfade, so daß eine Gesamtfunktion entsteht, die als Approximation der Nichtlinearität des elektrooptischen Modulators 5 entsteht. Beispielhaft weist das Funktionselement 7 eine sinusförmige Übertragungsfunktion auf, so daß beispielsweise die Abhängigkeit entsteht:

$$U_{PRE1} = U_{IN1} - \tfrac{1}{2} \cdot \sin(U_{IN1}). \tag{8}$$

Weist der elektrooptische Modulator 5 eine sinusförmige Kennlinie auf, so ist aufgrund der mathematischen Approximationsformel

$$\arcsin(x) \approx 2 \cdot x - \sin(x) \tag{9}$$

erreichbar, daß die Nichtlinearität des elektrooptischen Modulators 5 wegen

$$\arcsin(\sin(x)) = x \tag{10}$$

einen linearen Zusammenhang zwischen dem optischen Eingangssignal $P_{IN}$ und dem optischen Ausgangssignal $P_{OUT}$ ergibt. Ebenso ist es vorgesehen, andere Näherungsalgorithmen durch geeignete Auswahl des Funktionselements 7 oder gar die zusätzliche Einschaltung weiterer Zweige mittels Gegenphasenteilelementen und Koppelelementen vorzusehen, um eine entsprechend genaue Linearisierung zu erhalten.

In Figur 4 ist das Schaltbild für ein weiteres Ausführungsbeispiel dargestellt, das zunächst der Figur 1 entspricht, bei der das Verzerrungselement 1 nach Figur 3 eingesetzt wurde. Es besteht jedoch ein entscheidender Unterschied, indem anstelle der weiteren Gegenphasenteilelemente 15 lediglich Leistungsteilelemente 10 vorgesehen wurden, wobei jeweils ein Ausgang der beiden Leistungsteilelemente 10 über Kreuz mit dem anderen geführt wurde, so daß das dem Einzelsignal $U_{IN2}$ zugehörende, dem Funktionselement 7 zuzuführende Signal dem Funktionselement 7 zugeführt ist, das dem Einzelsignal $U_{IN1}$ zugeordnet ist und vice versa. Das eingangsseitige 180°-Hybrid 2a dient hierbei zur Erzeugung der Gegenphasenbeziehung sowohl im Bezug auf die Gegentaktansteuerung des elektrooptischen Modulators 5 als auch zum korrekten Betrieb der Funktionselemente 7. Dadurch ist für die gesamte Schaltungsanordnung lediglich ein einziges Gegenphasenteilelement 2a notwendig.

**Patentansprüche**

1. Linearisierungsschaltungsvorrichtung für einen elektrooptischen Modulator (5), in dem ein optisches Eingangssignal ($P_{IN}$) mit einem elektrischen Modulationssignal ($U_{IN}$) modulierbar ist, das dem elektrooptischen Modulator (5) über die Linearisierungsschaltungsvorrichtung (16) verzerrt zugeführt ist, wobei die Linearisierungsschaltungsvorrichtung (16) ein Gegenphasenteilelement (2a) aufweist, das das ankommende elektrische Modulationssignal ($U_{IN}$) in zwei gegenphasige Einzelsignale ($U_{IN1}$,$U_{IN2}$) aufteilt und wobei die Linearisierungsschaltungsvorrichtung (5) je ein Verzerrungselement (1) für jedes der Einzelsignale ($U_{IN1}$,$U_{IN2}$) aufweist, das eine vorgegebene Verzerrung des jeweiligen Einzelsignals ($U_{IN1}$,$U_{IN2}$) jeweils zu einem verzerrten Einzelsignal ($U_{PRE1}$,$U_{PRE2}$) bewirkt, dadurch gekennzeichnet, daß der elektrooptische Modulator (5) Differenzeingänge (17, 18) aufweist, denen die beiden durch das Verzerrungselement (1) verzerrten Einzelsignale ($U_{PRE1}$,$U_{PRE2}$) zugeführt sind.

2. Linearisierungsschaltungsvorrichtung nach Anspruch 1, dadurch gekennzeichnet, daß das Verzerrungselement (1) eine teilweise Reihenentwicklung der Umkehrfunktion der Übertragungsfunktion des elektrooptischen Modulators (5) realisiert.

3. Linearisierungsschaltungsvorrichtung nach Anspruch 2, dadurch gekennzeichnet, daß das Verzerrungselement (1) für das zu verzerrende Einzelsignal ($U_{IN1}$,$U_{IN2}$) ein weiteres Gegenphasenteilelement (15) aufweist, dessen einer Ausgang über ein Laufzeitelement (8) und/oder einen Multiplizierer (9) und dessen anderer Ausgang über ein Funktionselement (7) einem Koppelelement (6) zugeführt sind, an dessen Ausgang das verzerrte Einzelsignal ($U_{PRE1}$,$U_{PRE2}$) abgreifbar ist.

4. Linearisierungsschaltungsvorrichtung nach einem der Ansprüche 1 bis 3, dadurch gekennzeichnet, daß die beiden Verzerrungselemente (1) miteinander dergestalt verschaltet sind, daß jedes Verzerrungselement (1) für das jeweils zu verzerrende Einzelsignal ($U_{IN1}$,$U_{IN2}$) je ein Leistungsteilerelement (10) aufweist, dessen einer Ausgang über je ein Laufzeitelement (8) je einem Koppelelement (6) zugeführt ist und dessen anderer Ausgang über ein Funktionselement (7) an das jeweils andere Koppelelement (6) geführt ist, wobei an den Ausgängen der Koppelelemente (6) die verzerrten Einzelsignale ($U_{PRE1}$,$U_{PRE2}$) abgreifbar sind.

5. Linearisierungsschaltungsvorrichtung nach einem der Ansprüche 1 bis 4, dadurch gekennzeichnet, daß das Verzerrungselement (1) einen Mach-Zehnder-Modulator umfaßt.

6. Linearisierungsschaltungsvorrichtung nach einem der Ansprüche 1 bis 5, dadurch gekennzeichnet, daß das Funktionselement (7) einen Mach-Zehnder-Modulator umfaßt.

7. Linearisierungsschaltungsvorrichtung nach einem der Ansprüche 1 bis 6, dadurch gekennzeichnet, daß der elektrooptische Modulator (5) ein Mach-Zehnder-Modulator ist.

Fig. 1

Fig. 2

Fig. 3

Fig. 4